# EUROPÄISCHE PATENTANMELDUNG

(11) **EP 2 157 351 A1**
(43) Veröffentlichungstag der Anmeldung: **24.02.2010**
(21) Anmeldenummer: 08162567.5
(22) Anmeldetag: 19.08.2008
(51) Int. Cl.: F16L 37/091, F16L 37/098

(54) **Einsteckkupplung für Rohre**

(71) Anmelder: Schwer Fittings GmbH, 78588 Denkingen (DE)
(72) Erfinder: Simag, Thomas, 88214 Ravensburg (DE)
(74) Vertreter: Dr. Graf & Partner

(57) **Zusammenfassung**

Einsteckkupplung (1) für Rohre (3,4) umfassend einen Muffenkörper (2) mit einer sich in Richtung einer Längsachse (L) erstreckenden Ausnehmung (2k) zur Aufnahme eines Rohres (3,4), wobei in der Ausnehmung (2k) eine Einspannvorrichtung (11) angeordnet ist, wobei die Einspannvorrichtung (11) zumindest ein Halteteil (7), eine Kralle (8) und eine Schiebehülse (9) umfasst.

## Beschreibung

Die Erfindung betrifft eine Einsteckkupplung für Rohre gemäss dem Oberbegriff von Anspruch 1.

### Stand der Technik

Das Dokument EP 0 816 741 A2 offenbart eine Einsteckkupplung für Rohre. Nachteilig an dieser Einsteckkupplung ist die Tatsache, dass deren Handhabung bei der Montage relativ aufwendig ist. Ein weitere Nachteil ist die Tatsache, dass die Einsteckkupplung für höhere Drücke nicht geeignet ist. Ein weiterer Nachteil ist die Tatsache, dass sich an den Rohrenden Schmutz anlagern kann.

### Darstellung der Erfindung

Aufgabe der vorliegenden Erfindung ist es somit eine Einsteckkupplung zu bilden, die einfacher zu handhaben ist, und die insbesondere auch bezüglich Anlagerungen vorteilhaftere Eigenschaften aufweist.

Diese Aufgabe wir gelöst mit einer Einsteckkupplung für Rohre aufweisend die Merkmale von Anspruch 1. Die Unteransprüche 2 bis 13 betreffen weitere vorteilhafte Ausgestaltungen.

Die Aufgabe wird insbesondere gelöst mit einer Einsteckkupplung für Rohre umfassend einen Muffenkörper mit einer sich in Richtung einer Längsachse erstreckenden Ausnehmung zur Aufnahme eines Rohres, wobei die Ausnehmung von aussen beginnend einen ersten Teilabschnitt und nachfolgend einen zweiten Teilabschnitt aufweist, wobei der erste Teilabschnitt einen grösseren Innenquerschnitt als der zweite Teilabschnitt aufweist, wobei im ersten Teilabschnitt eine Einspannvorrichtung angeordnet ist, wobei die Einspannvorrichtung zumindest ein Halteteil, eine Kralle und eine Schiebehülse umfasst, wobei das Halteteil fest mit dem Muffenkörper verbunden ist und eine Auflagefläche für die Kralle aufweist, und wobei das Halteteil eine Innenöffnung zum Durchtritt des Rohres aufweist, und wobei die Kralle als ein kreisförmiger Grundkörper ausgestaltet ist, der in Verlaufsrichtung der Längsachse in einen ersten und einen zweiten Endabschnitt mündest, wobei der erste Endabschnitt ein Abstützmittel zur Auflage an der Auflagefläche aufweist, und wobei der zweite Endabschnitt durch eine Mehrzahl in Umfangsrichtung des kreisförmigen Grundkörpers beabstandet angeordneter Krallenelemente ausgestaltet ist, wobei die Krallenelemente zur Längsachse hin verlaufend je in einer Krallenspitze enden, und wobei die Schiebehülse einen in Verlaufsrichtung der Längsachse verschiebbaren Klemmring umfasst, und wobei der Innendurchmesser des Klemmrings derart bemessen ist, dass dieser aussen an der Kralle anliegen kann und in Verlaufsrichtung der Längsachse zumindest teilweise über die Kralle verschiebbar ist, derart, dass der Klemmring auf die Krallenelemente einen gegen die Längsachse hin wirkende Kraft ausübt.

Diese Ausführungsform weiß den Vorteil auf, dass das Rohr über die Kralle fest im Muffenkörper gehalten ist, wobei zum Befestigen des Rohr keine Rotationsbewegung erforderlich ist, sondern ein Längsverschieben der Schiebehülse in Verlaufsrichtung der Längsachse genügt. In einer vorteilhaften Ausgestaltung umfasst die Schiebehülse ein außerhalb des Muffenkörpers vorstehendes Betätigungsteil, welche es erlaubt die Schiebehülse zu verschieden, und dadurch die Kralle zu lösen, sodass das Rohr wieder aus dem Muffenkörper entfernt werden kann, z.B. zu Reinigungszwecken.

In einer besonders vorteilhaften Ausgestaltung umfasst die Einsteckkupplung eine Lösehülse, welche derart ausgestaltet und angeordnet ist, dass deren Verschiebung in Richtung der Längsachse L ein Anheben der Krallenspitzen bewirkt, so dass die Kralle das Rohr vollständig freigibt, und das Rohr daher aus dem Muffenkörper entfernt werden kann.

In einer besonders vorteilhaften Ausgestaltung weist der Muffenkörper in Verlaufsrichtung der Längsachse zwei gegengleich angeordnete Ausnehmungen mit Einspannvorrichtungen auf, so dass beidseitig je ein Rohr in den Muffenkörper einführbar, und mit Hilfe der Einspannvorrichtung fixierbar ist. In einer besonders vorteilhaften Ausgestaltung weist der Muffenkörper im Innern einen Anschlag auf, an welchem die Rohrende zu liegen kommen, so dass an der Verbindungsstelle zwischen dem Rohrende und dem Muffenkörper keine Zwischenräume entstehen, welche verschmutzt werden könnten, oder in welchem sich Material ansammeln könnte. Die erfindungsgemäße Einsteckkupplung weist somit den Vorteil auf, dass die Rohre über ein einfaches, in Verlaufs Richtung der Längsachse L zu betätigendes Schiebeelement im Muffenkörper fixierbar und auch wieder lösbar sind. Dies ermöglicht ein sehr angenehmes, schnelles und somit auch kostengünstiges Befestigen und/oder Lösen der Rohre. In einer besonders vorteilhaften Ausgestaltung liegt die Stirnseite des Rohrs an einer Fläche im Muffenkörper an, wobei das Rohr doch die Kralle derart gehalten ist, dass sich das Rohr in Längsrichtung kaum oder nicht verschieben kann. Dies bewirkt eine besonders sichere Verbindung zwischen Rohr und Einsteckkupplung. Diese Einsteckkupplung ist insbesondere auch zum Leiten eines Fluides geeignet, das einen höheren Druck von beispielsweise bis zu 250 Bar aufweist. Dadurch, dass eine Verschiebung des Rohrs in Längsrichtung verhindert wird, entsteht an der Stirnseite des Rohrs, beziehungsweise zwischen der Stirnseite des Rohrs und dem Muffenkörper keine oder eine nur sehr geringe Ablagerung. Diese Ausgestaltung weist den Vorteil auf, dass die Einsteckkupplung in längeren Wartungsintervallen gereinigt werden kann. Die Einsteckkupplung ist daher in Verbindung mit einer Vielzahl von Fluiden geeignet, insbesondere auch für zähflüssige Fluide.

Die Rohre sind vorzugsweise als Kunststoffrohre ausgestaltet, und sind in einer besonders bevorzugten Ausführungsform aus PVC gefertigt. Die Kralle besteht vorzugsweise aus Metall. Diese Kombination von einer relativ harten Kralle und einem relativ weichen Rohr weist den Vorteil auf, dass die Kralle besonders gut in die Oberfläche des Rohrs eindringen kann, sodass das Rohr durch die Kralle besonders gut gehalten ist.

Die Erfindung wird nachfolgen an Hand von mehreren Ausführungsbeispielen im Detail beschrieben.

### Kurze Beschreibung der Zeichnungen

Die zur Erläuterung der Ausführungsbeispiele verwendeten Zeichnungen zeigen:
- Fig. 1: einen Schnitt in einer axialen Schnittebene durch eine als Doppelmuffe ausgebildete Einsteckkupplung;
- Fig. 2a: eine perspektivische Ansicht einer Haltehülse;
- Fig. 2b: eine perspektivische Ansicht einer Schiebehülse;
- Fig. 2c: eine perspektivische Ansicht einer Lösehülse;
- Fig. 2d: eine perspektivische Ansicht einer Kralle;
- Fig. 3: die in den Figuren 2a bis 2d dargestellten Elemente in zusammengesetztem Zustand;
- Fig. 4: eine Detailansicht der Figur 1;
- Fig. 5: die Detailansicht gemäss Figur 4 in geöffnetem Zustand;
- Fig. 6: die Detailansicht gemäss Figur 4 während dem Öffnen der Kralle;
- Fig. 7: eine Detailansicht der Kralle in geöffnetem Zustand;
- Fig. 8: eine Detailansicht der Kralle in geschlossenem Zustand;
- Fig. 9: eine Detailansicht eines Rohranschlages in der Doppelmuffe;
- Fig. 10: ein Längsschnitt durch einen Endabschnitt der Kralle;
- Fig. 11: eine Seitenansicht eines an eine Einsteckkupplung angelegten, als Lösebügel und Spannbügel ausgestaltetes Werkzeuges;
- Fig. 12: einen Schnitt durch eine als Einfachmuffe ausgebildete Einsteckkupplung;
- Fig. 13: einen Schnitt durch eine Muffe ohne Muffengrund;
- Fig. 14 bis 16: einen Schnitt durch eine Muffe mit unterschiedlich ausgestalteten Einspannvorrichtungen;
- Fig. 17: einen Schnitt durch eine Doppelmuffe mit um 90 Grad versetzten Muffenteilen.

Grundsätzlich sind in den Zeichnungen gleiche Teile mit gleichen Bezugszeichen versehen.

### Wege zur Ausführung der Erfindung

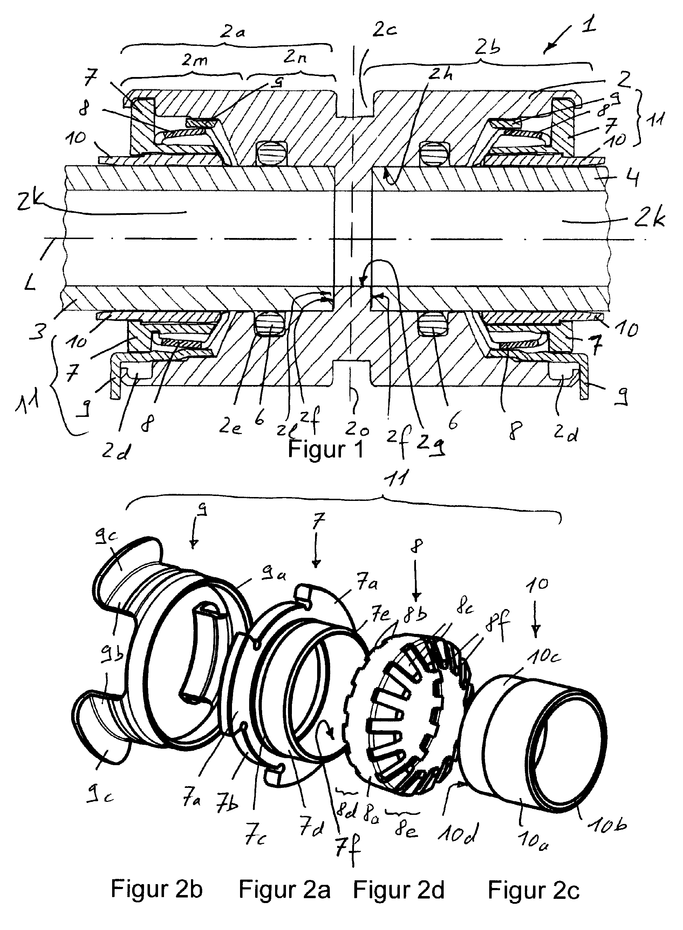

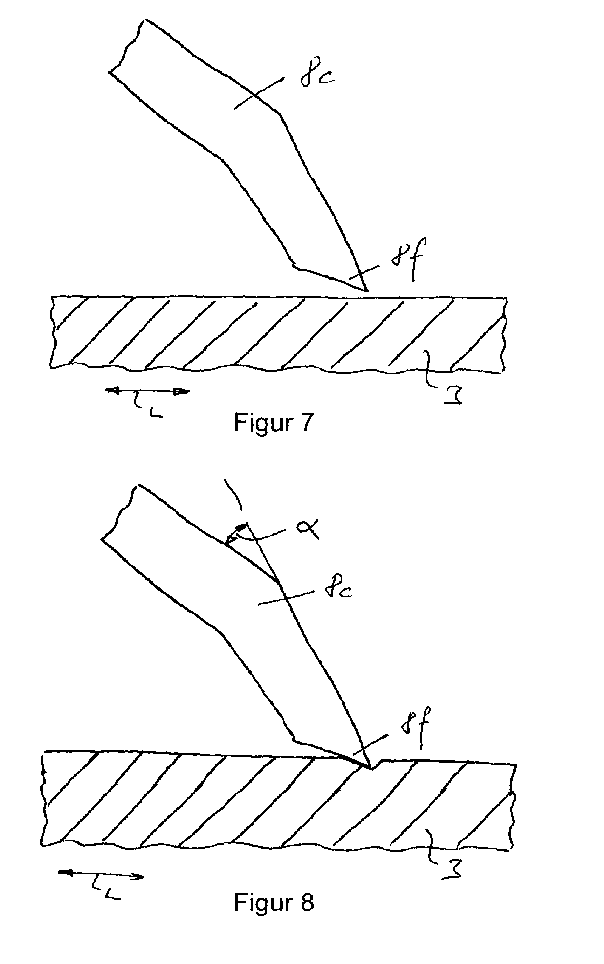

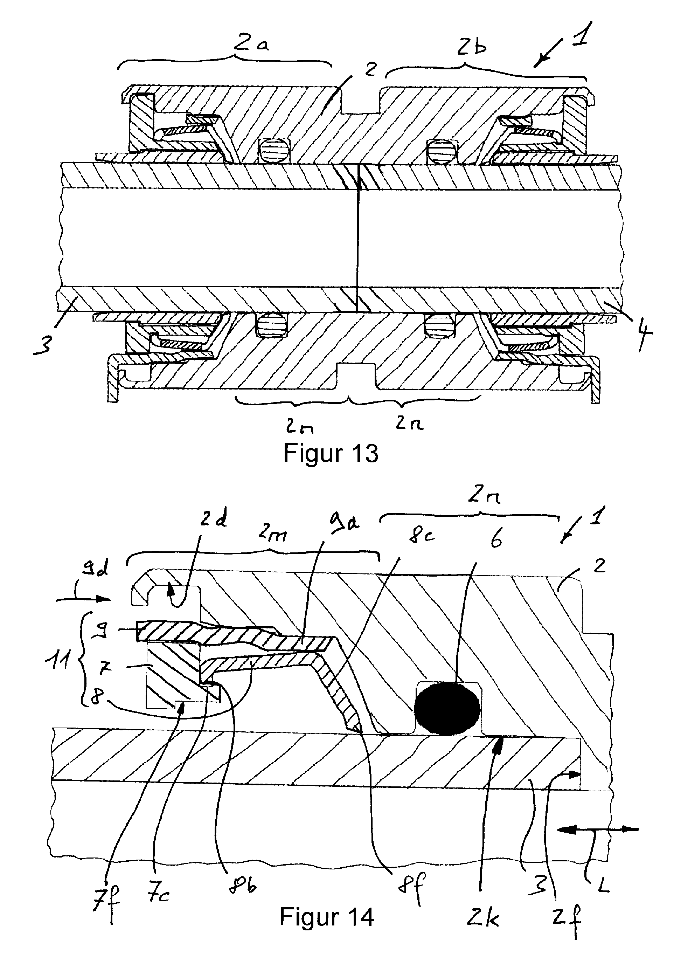

Fig. 14 zeigt eine Einsteckkupplung 1 für ein Rohr 3 umfassend einen Muffenkörper 2 mit einer sich in Richtung einer Längsachse L erstreckenden Ausnehmung 2k zur Aufnahme des Rohres 3. Die in der dargestellten Ansicht links aussen beginnende Ausnehmung 2k weist einen ersten Teilabschnitt 2m und nachfolgend einen zweiten Teilabschnitt 2n auf. Der erste Teilabschnitt 2m weist einen grösseren Innenquerschnitt auf als der zweite Teilabschnitt 2n. Im ersten Teilabschnitt 2m ist eine Einspannvorrichtung 11 angeordnet ist, wobei die Einspannvorrichtung 11 in diesem Ausführungsbeispiel ein Halteteil 7, eine Kralle 8 und eine Schiebehülse 9 umfasst. Das Halteteil 7 ist über die Haltenut 2d fest mit dem Muffenkörper 2 verbunden. Das Halteteil 7 umfasst eine Auflagefläche 7c für die Kralle 8, wobei das Halteteil 7 eine Innenöffnung 7f zum Durchtritt des Rohres 3 aufweist. Die Kralle 8 ist, wie auch aus Figur 2d ersichtlich, als ein kreisförmiger Grundkörper 8a ausgestaltet ist, der in Verlaufsrichtung der Längsachse L in einen ersten und einen zweiten Endabschnitt 8d, 8e mündest, wobei der erste Endabschnitt 8d ein Abstützmittel 8b zur Auflage an der Auflagefläche 7c aufweist, und wobei der zweite Endabschnitt 8e durch eine Mehrzahl in Umfangsrichtung des kreisförmigen Grundkörpers 8 beabstandet angeordneter Krallenelemente 8c ausgestaltet ist, wobei die Krallenelemente 8c zur Längsachse L hin verlaufend je in einer Krallenspitze 8f enden. Wie aus Figur 2b ersichtlich umfasst die Schiebehülse 9 einen in Verlaufsrichtung der Längsachse L verschiebbaren Klemmring 9a, wobei der Innendurchmesser des Klemmrings 9a derart bemessen ist, dass dieser aussen an der Kralle 8 anliegen kann und in Verlaufsrichtung der Längsachse L zumindest teilweise über die Kralle 8 verschiebbar ist, derart, dass der Klemmring 9a auf die Krallenelemente 8c einen gegen die Längsachse L hin wirkende Kraft ausübt, sodass die Krallenspitzen 8f, wie aus Figur 14 und Figur 8 ersichtlich, unter Vorspannung an der Oberfläche des Rohrendes 3 anliegen, und dadurch ein Verschieben des Rohres 3, im dargestellten Ausführungsbeispiel, zumindest nach links behindern. Zum Fixieren des Rohrendes 3 im Muffenkörper 2 wird somit zuerst das Rohrende 3 in die Ausnehmung 2k geschoben und danach die Schiebehülse 9 im dargestellten Ausführungsbeispiel in Bewegungsrichtung 9d nach rechts geschoben, sodass sich der Klemmring 9a über die Kralle 8 schiebt, und dadurch die Krallenspitzen 8f in die Oberfläche des Rohrendes 3 eingreifen und dieses halten. In einer vorteilhaften Ausgestaltung weist der Muffenkörper 2 eine Anschlagfläche 2f auf, an welcher wie dargestellt die Stirne des Rohrendes 3 anliegt, sodass diese Anschlagfläche 2f sowie die Kralle 8 eine Bewegung des Rohrendes 3 in Verlaufsrichtung der Längsachse L behindern und vorzugsweise gänzlich oder im Wesentlichen gänzlich verhindern.

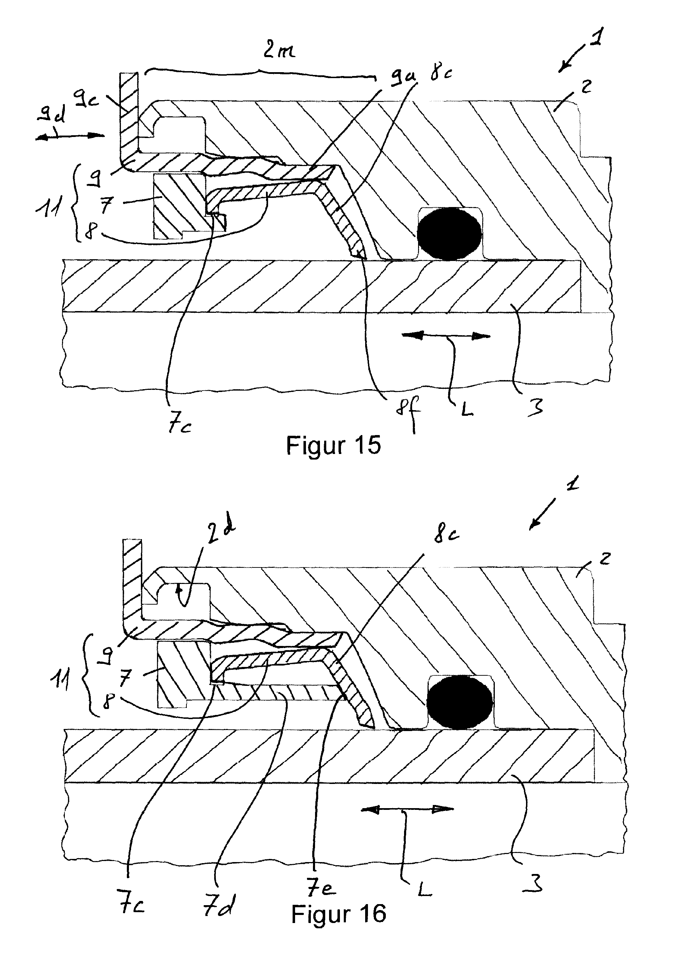

Figur 15 zeigt in einem Längsschnitt eine weitere vorteilhafte Ausgestaltung einer Einsteckkupplung 1, bei welcher der Innendurchmesser des ersten Teilabschnittes 2m derart ausgestaltet ist, dass die Aussenfläche des Klemmrings 9a auf der Innenseite des ersten Teilabschnittes 2m anliegen kann. Diese Ausgestaltung ermöglichst, dass der in den ersten Teilabschnitt 2m eingeschobene Klemmring 9a eine besonders grosse Kraft auf die Kralle 8 ausüben kann. Die Schiebehülse 9 umfasst vorzugsweise ein aussen am Muffenkörper 2 vorstehendes Betätigungsteil 9c, sodass die Schiebehülse 9 in Bewegungsrichtung 9d bzw. in Verlaufsrichtung der Längsachse L in den ersten Teilabschnitt 2m hineinschiebbar ist, um die Kralle 8 zu verkeilen, oder dass die Schiebehülse 9 in Verlaufsrichtung der Längsachse L zumindest teilweise aus dem ersten Teilabschnitt 2m herausschiebbar ist, um die verkeilte Kralle 8 an deren Aussenoberfläche zu lösen. Der Innendurchmesser des ersten Teilabschnittes 2m könnte auch derart gewählt sein, dass der Klemmring 9a sich nicht an der Innenfläche des Muffenkörpers 2 abstützt.

Figur 16 zeigt in einem Längsschnitt ein weiteres vorteilhaftes Ausführungsbeispiel einer Einsteckkupplung 1. Die Haltehülse 7 ist, wie in Figur 2a im Detail dargestellt, flanschförmig ausgestaltet, mit drei in Umfangsrichtung beabstandet angeordneten, senkrecht zur Längsachse L verlaufendes Haltesegmenten 7a, welches fest mit dem Muffenkörper 2 verbunden sind, indem diese in der Haltenut 2d liegen. Die Haltehülse 7 umfasst einen hohlzylinderförmigen Fortsatz 7d mit einer Nut 7c, wobei der hohlzylinderförmige Fortsatz 7d in einem Anschlag 7e endet. Die Länge des hohlzylinderförmigen Fortsatzes 7d und die Kralle 8 sind derart gegenseitig angepasst ausgestaltet sind, dass die Krallenelemente 8c am Anschlag 7e anliegen, zumindest wenn die Schiebehülse 9 über den Klemmring 9a auf die Kralle 8 wirkt. Der Anschlag 7e weist den Vorteil auf, dass eine Verschieben der Krallenelemente 8c in Verlaufsrichtung der Längsachse L vermieden wird, was zur Folge hat, dass das Rohrende 3 besonders gut im Muffenkörper 2 gehalten ist, und sich im eingespannten Zustand kaum oder gar nicht in Längsrichtung L bezüglich dem Muffenkörper 2 verschieben kann. Diese Ausgestaltung weist den weiteren Vorteil auf, dass eine derartig ausgestaltete Einsteckkupplung auch unter hohem Druck sicher betrieben werden kann, z.B. wenn das Fluid im Rohrende 3 unter hohem Druck steht, und beispielweise einen Druck zwischen 100 Bar und 250 Bar aufweist.

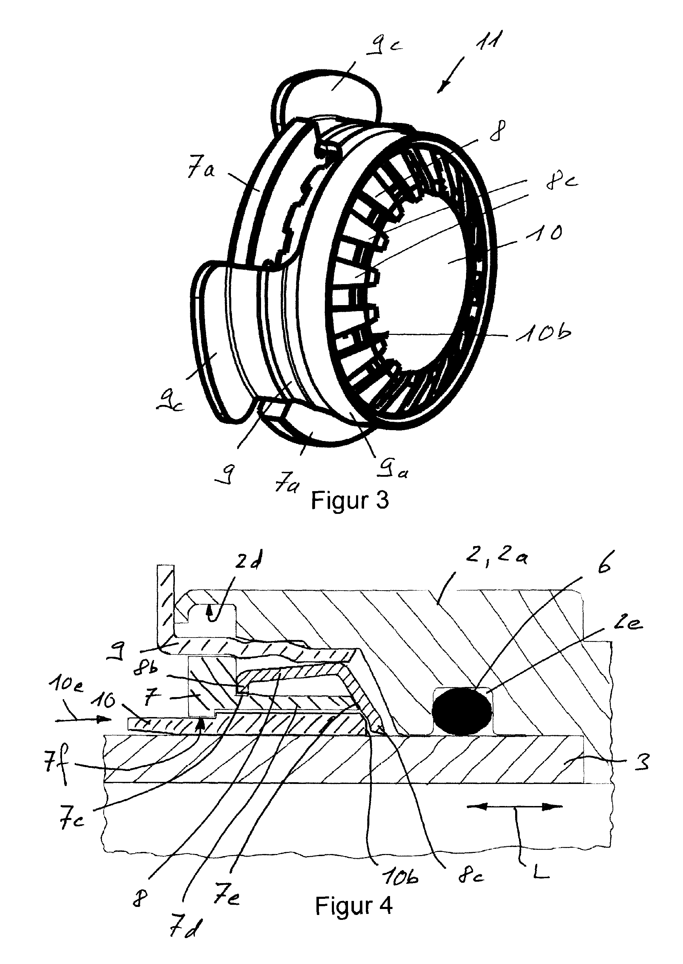

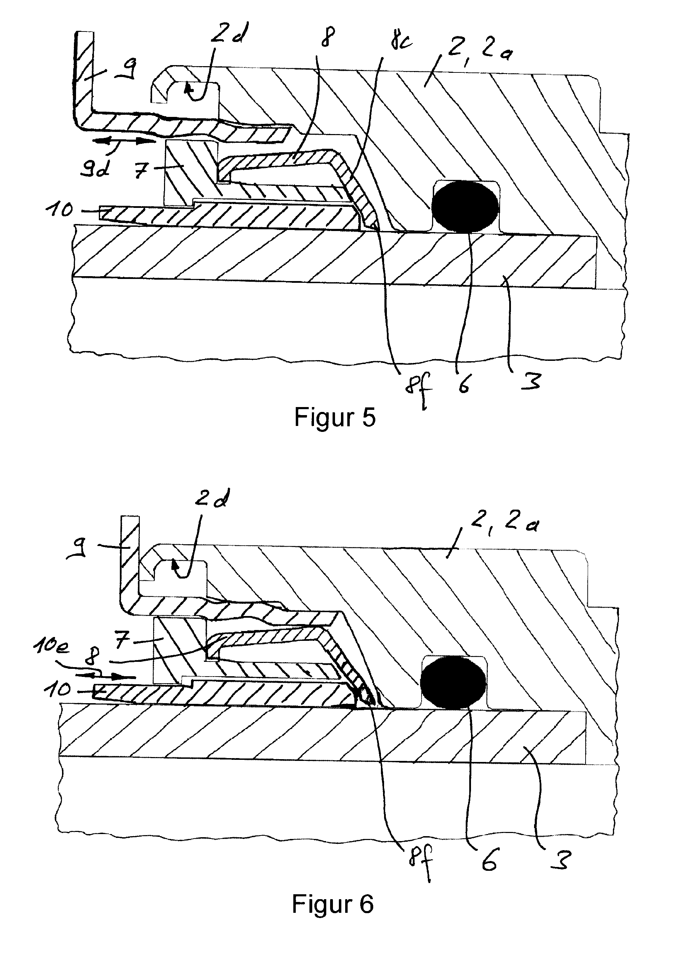

Figur 4 zeigt in einem Längsschnitt das vorteilhafteste Ausführungsbeispiel der erfindungsgemässen Einsteckkupplung 1. Im Unterschied zu dem in Figur 16 dargestellten Ausführungsbeispiel weist die in Figur 4 dargestellte Einspannvorrichtung 11 zusätzlich eine Lösehülse 10 auf, welche innerhalb der Innenöffnung 7f des Halteteils 7 in Richtung der Längsachse L verlaufend und in Richtung 10e bzw. in Richtung der Längsachse L verschiebbar angeordnet ist, wobei die Lösehülse 10 eine gegen die Krallenelemente 8c hin ausgerichtete Stossfläche 10b aufweist, welche derart angeordnet ist, dass diese eine bezüglich der Längsachse L gegen aussen wirkende Kraft auf die Krallenspitzen 8f ausüben kann, um die Krallenspitzen 8f radial zur Längsachse L gegen aussen zu verschieben. In einer bevorzugten Ausgestaltung ermöglicht die Lösehülse 10 somit die Krallenspitzen 8f vollständig von der Oberfläche des Rohrendes 3 abzuheben, wie in Figur 7 dargestellt, sodass das Rohrende 3 einfach und unter sehr geringer Kraftaufwendung aus dem Muffenkörper 2 gezogen werden kann. Um das Rohrende 3 aus dem Muffenkörper 2 zu lösen wird bevorzugt, wie in Figur 5 dargestellt, vorerst die Schiebehülse 9 in Bewegungsrichtung 9d nach Aussen verschoben, das heisst in der dargestellten Anordnung nach links verschoben, und danach, wie in Figur 6 dargestellt, die Lösehülse 10 in Bewegungsrichtung 10e nach rechts verschoben, was die Verbindungen zwischen den Krallenspitzen 8f und der Oberfläche des Rohrendes 3 beziehungsweise zwischen der Kralle 8 und dem Rohrende 3 vollständig löst. Ein Vorteil der erfindungsgemässen Einsteckkupplung 1 ist auch darin zu sehen, dass sowohl zum Befestigen als auch zum Lösen des Rohrendes 3 eine Bewegung in Längsrichtung L genügt. Diese Bewegungen sind viel schneller durchführbar als beispielweise eine Drehbewegung, was zur Folge hat, dass das Rohrende 3 sehr schnell mit der erfindungsgemässen Einsteckkupplung 1 verbunden oder aus dieser wieder herausgelöst werden kann. Dies verkürzt zudem den Zeitaufwand bezüglich Montage und/oder Wartung. Falls erforderlich kann die Kralle 8 auch wie in Figur 6 dargestellt gelöst werden, indem bei vollständig eingeschobener Schiebehülse 9 die Lösehülse 10 hineingestossen wird, um die Krallenspitzen 8f anzuheben und dadurch das Rohr 3 zu lösen. Dazu ist jedoch üblicherweise ein relativ hoher Kraftaufwand erforderlich, weshalb es vorteilhafter ist zum Lösen des Rohres 3 zuerst die Schiebehülse 9 nach aussen zu ziehen, wie in Figur 5 dargestellt, und danach die Lösehülse 10 hineinzuschieben, um dadurch mit geringem Kraftaufwand auf die Lösehülse 10 die Krallenspitzen 8f anzuheben.

Die Figuren 2a bis 2d zeigen die einzelnen Bestandteile der Einspannvorrichtung 11, wie diesen in den Ausführungsbeispielen gemäss der Figuren 4 bis 6 verwendet wird, im Detail. Die dargestellte Einspannvorrichtung 11 umfasst ein Halteteil 7, eine Kralle 8, eine Schiebehülse 9 und eine Lösehülse 10. Das Halteteil 7 umfasst drei in Umfangsrichtung verteilt angeordnete, und durch Zwischenräume 7b beabstandete Haltesegmente 7a. Das Halteteil 7 ist flanschförmig ausgestaltet und umfasst einen hohlzylinderförmigen Fortsatz 7d mit einer kreisförmigen Innenöffnung 7f. Zudem weist der hohlzylinderförmige Fortsatz 7d im Bereich der Haltesegmente 7a eine umlaufende Nut 7c auf. Das Halteteil 7 ist über die Haltesegmente 7a fest in einer Haltenut 2d des Muffenkörpers 2 verankerbar. Die Kralle 8 umfasst einen kreisförmigen bzw. hohlzylinderförmigen Grundkörper 8a, dem nachfolgend links und rechts ein erster beziehungsweise zweiter Endabschnitt 8d, 8e folgt. Der erste Endabschnitt 8d umfasst eine Mehrzahl in Umfangsrichtung beabstandet angeordnete Abstützteile 8b. Der zweite Endabschnitt 8e umfasst eine Mehrzahl in Umfangsrichtung beabstandet angeordnete Krallenelemente 8c, die je in eine Krallenspitze 8f münden. Die Kralle 8 liegt über die Abstützteile 8b in der Nut 7c des Halteteils 7 auf. Die Schiebehülse 9 umfasst einen Klemmring 9a, der über Verbindungsteile 9b mit Betätigungsteilen 9c verbunden ist. Die Lösehülse 10 umfasst einen ersten Abschnitt 10a, der in einer Stossfläche 10b endet, sowie einen zweiten Abschnitt 10c, der in einer zweiten Stossfläche 10d endet. Sowohl die Schiebehülse 9 als auch die Lösehülse 10 sind bezüglich dem Halteteil 7 verschiebbar gelagert, um dadurch die Kralle 8 beziehungsweise deren Krallenelemente 8c mit Krallenspitzen 8f wie vorgängig beschrieben zu fixieren oder zu lösen. Figur 3 zeigt die in den Figuren 2a bis 2d dargestellte Einspannvorrichtung 11 in zusammengesetztem Zustand. Eine derartige Einspannvorrichtung 11 ist in den in den Figuren 1, 4, 5, 6, 12 und 13 dargestellten Ausführungsbeispielen im ersten Teilabschnitt 2m der Ausnehmung 2k im Muffenkörper 2 angeordnet. In einer bevorzugten Ausgestaltung ist die Kralle 8 aus Metall gefertigt, insbesondere aus einem Edelstahl. Das Halteteil 7, die Schiebehülse 9 und die Lösehülse 10 sind vorzugsweise aus einem Kunststoff gefertigt. Auch die Kralle 8 könnte aus einem Kunststoff gefertigt sein.

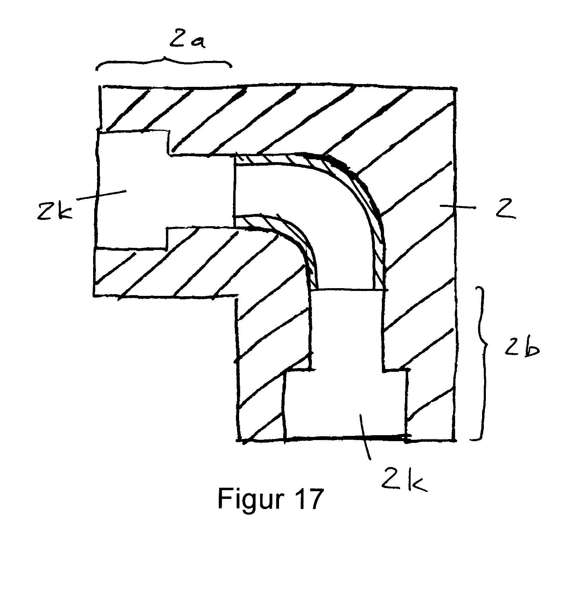

Figur 1 zeigt einen Muffenkörper 1 mit zwei bezüglich einer Symmetrieebene 2o gegengleich angeordneten Ausnehmungen 2k mit je einer Einspannvorrichtung 11, die je ein Rohrende 3,4 halten. Ansonst ist der Muffenkörper 2, die Ausnehmungen 2k und die Einspannvorrichtung 11 wie in Figur 4 dargestellt ausgestaltet. Der Muffenkörper 2 weist zwischen den beiden Ausnehmungen 2k eine Durchtrittsöffnung 2g auf, deren Innendurchmesser dem Innendurchmesser der Rohrenden 3,4 entspricht, sodass die durch die Einsteckkupplung 1 bewirkte Verbindung der Rohrenden 3,4 einen durchgehend konstanten Innenquerschnitt aufweist. Vorzugsweise verlaufen die beiden Ausnehmungen 2k in Richtung der Längsachse L. Die beiden Ausnehmungen 2k können jedoch auch, wie in Figur 17 schematisch dargestellt, unter einem Verlaufswinkel zwischen 0 Grad und 180 Grad verlaufen, in einer bevorzugten Ausgestaltung wie dargestellt unter 90 Grad. Das in Figur 17 dargestellte Ausführungsbeispiel kann, mit Ausnahme des gegenseitigen Verlaufs der Ausnehmungen 2k, ansonst gleich ausgestaltet sein wie die in Figur 1 dargestellte Einsteckkupplung 1.

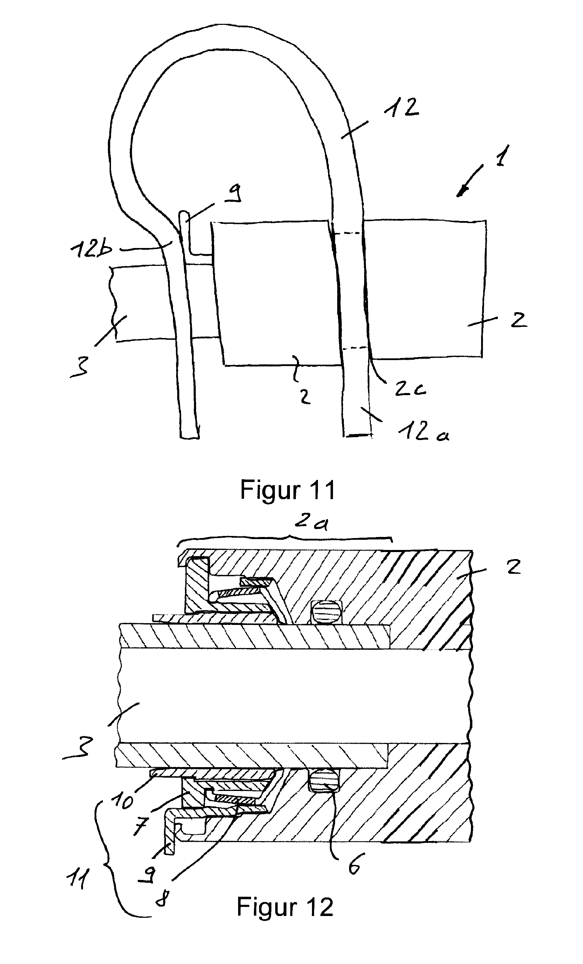

Die Einsteckkupplung 1 kann auch, wie in Figur 12 dargestellt, nur eine einseitige Kupplung aufweisen, weil, wie in Figur 12 beispielhaft dargestellt, die Einsteckkupplung 1 beispielweise in eine fest angeordnete Zuleitung mündet.

Der Muffenkörper 2 könnte auch, wie in Figur 13 schematisch dargestellt, zwei Teilabschnitte 2n mit demselben Innenquerschnitt aufweisen, wobei die beiden Teilabschnitte 2n eine durchgängige Verbindung mit identischem Innenquerschnitt ausbilden. Die beiden Rohrenden 3,4 können in diesem Ausführungsbeispiel beispielsweise, wie dargestellt, mit deren Stirnflächen sich gegenseitig berührend aneinanderliegen, was den Rohrenden 3,4 einen besonders guten, gegenseitigen Halt gewährt.

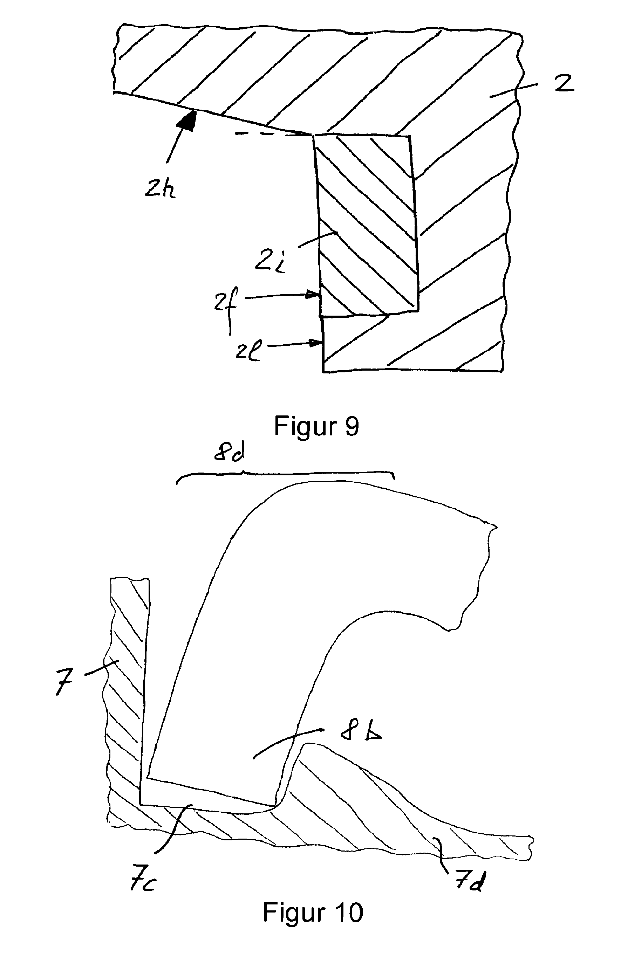

Wie aus der Detailansicht aus Figur 9 ersichtlich kann es sich als vorteilhaft erweisen den zweiten Teilabschnitt 2n zumindest im Bereich dessen Endabschnittes zur Anschlagseite 2f hin mit einer konisch verlaufend Innenfläche 2h auszugestalten, um dadurch beispielsweise eine zusätzliche Haltekraft oder ein Zentrieren auf ein eingeführtes Rohrende 3,4 zu bewirken. Es kann sich zudem als vorteilhaft erweisen an der Anschlagseite 2f bzw. 21 eine ringförmige Dichtung 2i vorzusehen, um das Rohrende 3,4 bezüglich dem Muffenkörper 2 besonders gut abzudichten.

Figur 7 zeigt eine Detailansicht eines Krallenelementes 8c mit Krallenspitze 8f in geöffnetem Zustand, in welchem die Krallenspitze 8f bezüglich der Oberfläche des Rohrendes 3,4 beabstandet angeordnet ist, sodass das Rohrende 3,4 leicht in Längsrichtung L verschiebbar ist. Figur 8 zeigt eine Detailansicht eines Krallenelementes 8c mit Krallenspitze 8f in eingespanntem beziehungsweise geschlossenem Zustand, in welchem die Krallenspitze 8f in die Oberfläche des Rohrendes 3,4 gedrückt wird, sodass das Rohrende 3,4 in Längsrichtung L kaum oder nicht verschiebbar ist. In einer bevorzugten Ausgestaltung weisen die Krallenelemente 8c in deren Verlaufsrichtung einen Knick auf, beispielsweise um einen Winkel α. Diese gekröpfte Ausgestaltung der Krallenelemente 8c ermöglicht ein besonders vorteilhaftes Halten der Rohrende 3,4.

Figur 10 zeigt ein Detail des Endabschnittes 8d der Kralle 8, welche mit deren Abstützteil 8b in der Nut 7c des Halteteils 7 liegt. Diese Anordnung gewährt der Kralle 8 in gewisse Bewegungsrichtungen ein hohes Mass an Beweglichkeit. Dies ermöglicht, dass die Kralle 8 mit denen Krallenelementen 8c und Krallenspitzen 8f besonders gut an oder Oberfläche des Rohrendes 3,4 anliegen kann.

Figur 11 zeigt schematisch ein Werkzeug 12 zum Betätigen beziehungsweise zum Verschieben der Schiebehülse 9 und/oder der Lösehülse 10. Der Muffenkörper 2 weist eine Eingriffstelle 2c auf, welche beispielsweise in Figur 1 als umlaufende Nut ausgestaltet ist. Das Werkzeug 12 ist als U-förmiges Teil ausgestaltet, dessen eines Ende 12a in die Eingriffstelle 2c einführbar ist, und dessen andere Ende 12b an der Schiebehülse 9 oder an der Lösehülse 10 angelegt werden kann, um diese in Richtung der Längsachse L des Muffenkörpers 2 zu verschieben, entweder in den Muffenkörper 2 hinein, oder aus dem Muffenkörper 2 heraus. Durch gegenseitiges Zusammendrücken der beiden Enden 12a, 12b wird die Schiebehülse 9 in den Muffenkörper 2 hineingeschoben. Durch ein gegenseitiges Spreizen der beiden Enden 12a, 12b wird die Schiebehülse 9 aus dem Muffenkörper 2 herausgezogen, wobei die Schiebehülse 9 natürlich vom Ende 12b entsprechend gehalten werden muss, um auf die Schiebehülse 9 die nach aussen wirkende Kraft zu erzeugen.

## Patentansprüche

1. Einsteckkupplung (1) für Rohre (3,4) umfassend einen Muffenkörper (2) mit einer sich in Richtung einer Längsachse (L) erstreckenden Ausnehmung (2k) zur Aufnahme eines Rohres (3,4), **dadurch gekennzeichnet, dass** die Ausnehmung (2k) von aussen beginnend einen ersten Teilabschnitt (2m) und nachfolgend einen zweiten Teilabschnitt (2n) aufweist, dass der erste Teilabschnitt (2m) einen grösseren Innenquerschnitt als der zweite Teilabschnitt (2n) aufweist, wobei im ersten Teilabschnitt (2m) eine Einspannvorrichtung (11) angeordnet ist, wobei die Einspannvorrichtung (11) zumindest ein Halteteil (7), eine Kralle (8) und eine Schiebehülse (9) umfasst, wobei das Halteteil (7) fest mit dem Muffenkörper (2) verbunden ist und eine Auflagefläche (7c) für die Kralle (8) aufweist, und wobei das Halteteil (7) eine Innenöffnung (7f) zum Durchtritt des Rohres (3,4) aufweist, und wobei die Kralle (8) als ein kreisförmiger Grundkörper (8a) ausgestaltet ist, der in Verlaufsrichtung der Längsachse (L) in einen ersten und einen zweiten Endabschnitt (8d, 8e) mündest, wobei der erste Endabschnitt (8d) ein Abstützmittel (8b) zur Auflage an der Auflagefläche (7c) aufweist, und wobei der zweite Endabschnitt (8e) durch eine Mehrzahl in Umfangsrichtung des kreisförmigen Grundkörpers (8) beabstandet angeordneter Krallenelemente (8c) ausgestaltet ist, wobei die Krallenelemente (8c) zur Längsachse (L) hin verlaufend je in einer Krallenspitze (8f) enden, und wobei die Schiebehülse (9) einen in Verlaufsrichtung der Längsachse (L) verschiebbaren Klemmring (9a) umfasst, und wobei der Innendurchmesser des Klemmrings (9a) derart bemessen ist, dass dieser aussen an der Kralle (8) anliegen kann und in Verlaufsrichtung der Längsachse (L) zumindest teilweise über die Kralle (8) verschiebbar ist, derart, dass der Klemmring (9a) auf die Krallenelemente (8c) einen gegen die Längsachse (L) hin wirkende Kraft ausübt.

2. Einsteckkupplung (1) nach Anspruch 1, **dadurch gekennzeichnet, dass** die Einspannvorrichtung (11) eine Lösehülse (10) umfasst, welche innerhalb der Innenöffnung (7f) des Halteteils (7) in Richtung der Längsachse (L) verlaufend und in Richtung der Längsachse (L) verschiebbar angeordnet ist, wobei die Lösehülse (10) eine gegen die Krallenelemente (8c) hin ausgerichtete Stossfläche (10b) aufweist, welche derart angeordnet ist, dass diese eine bezüglich der Längsachse (L) gegen aussen wirkende Kraft auf die Krallenspitzen (8f) ausüben kann, um die Krallenspitzen (8f) radial zur Längsachse (L) gegen aussen zu verschieben.

3. Einsteckkupplung (1) nach einem der vorhergehenden Ansprüche, **dadurch gekennzeichnet, dass** die Haltehülse (7) flanschförmig ausgestaltet ist, umfassend ein senkrecht zur Längsachse (L) verlaufendes Haltesegment (7a), welches fest mit dem Muffenkörper (2) verbunden ist, und umfassend einen hohlzylinderförmigen Fortsatz (7d) der in einem Anschlag (7e) endet, wobei die Länge des hohlzylinderförmigen Fortsatzes (7d) und die Kralle (8) derart gegenseitig angepasst ausgestaltet sind, dass die Krallenelemente (8c) am Anschlag (7e) anliegen.

4. Einsteckkupplung (1) nach einem der vorhergehenden Ansprüche, **dadurch gekennzeichnet, dass** die Schiebehülse (9) ein Betätigungsteil (9c) aufweist, das aussen am Muffenkörper (2) vorsteht.

5. Einsteckkupplung (1) nach einem der vorhergehenden Ansprüche, **dadurch gekennzeichnet, dass** der erste Teilabschnitt (2m) im Bereich der Krallenelemente (8c) einen Innenquerschnitt aufweist, der kleiner oder gleich dem Aussenquerschnitt des Klemmrings (9a) ist.

6. Einsteckkupplung (1) nach einem der Ansprüche 2 bis 5, **dadurch gekennzeichnet, dass** die Lösehülse (10) ein Betätigungsteil (10c) aufweist, das aussen am Muffenkörper (2) vorsteht.

7. Einsteckkupplung (1) nach einem der vorhergehenden Ansprüche, **dadurch gekennzeichnet, dass** die Ausnehmung (2k) im zweiten Teilabschnitt (2n) eine ringförmige Nut (2e) aufweist, in welcher ein Dichtungsring (6) angeordnet ist.

8. Einsteckkupplung (1) nach einem der vorhergehenden Ansprüche, **dadurch gekennzeichnet, dass** die Ausnehmung (2k) im zweiten Teilabschnitt (2n) in einen Muffengrund (2f) mündet, und dass der Muffengrund (2f) eine Anschlagfläche (21) für das Rohr (3,4) ausbildet.

9. Einsteckkupplung (1) nach einem der vorhergehenden Ansprüche, **dadurch gekennzeichnet, dass** der Muffenkörper (2) zwei gegengleich verlaufend angeordnete Ausnehmungen (2k) aufweist, in welcher je eine Einspannvorrichtung (11) angeordnet ist, wobei die beiden Ausnehmungen (2k) Fluid leitend verbunden sind.

10. Einsteckkupplung nach Anspruch 9, **dadurch gekennzeichnet, dass** die beiden Ausnehmungen (2k) in Richtung der Längsachse (L) verlaufen.

11. Einsteckkupplung nach Anspruch 9, **dadurch gekennzeichnet, dass** sich die Verlaufsrichtungen der beiden Ausnehmungen (2k) unter einem Winkel zwischen 0 und 90 Grad treffen.

12. Einsteckkupplung (1) nach einem der vorhergehenden Ansprüche, **dadurch gekennzeichnet, dass** der Muffenkörper (2) an dessen Aussenseite eine Eingriffsstelle (2c) für ein Werkzeug (12) aufweist, wobei das Werkzeug (12) zum Verschieben der Schiebehülse (9) und/oder der Lösehülse (10) ausgestaltet ist.

13. Kit umfassend eine Einsteckkupplung (1) nach einem der vorhergehenden Ansprüche, sowie umfassend ein Werkzeug (12) zum Verschieben der Schiebehülse (9) und/oder der Lösehülse (10).
